# EUROPEAN PATENT SPECIFICATION

(11) **EP 3 118 264 B1**
(45) Date of publication and mention of the grant of the patent: **17.08.2022**
(21) Application number: 15761193.0
(22) Date of filing: 17.02.2015
(51) Int. Cl.: C08L 101/14, C08L 29/04, C08L 67/02, C08L 67/04, C08L 71/02, C09K 8/12, C09K 8/68, E21B 43/22

(54) **RESIN MOLDED ARTICLE TO BE THROWN IN WATER**
HARZFORMKÖRPER ZUM EINWERFEN IN WASSER
ARTICLE MOULÉ EN RÉSINE À JETER À L'EAU

(30) Priority: 11.03.2014 JP 2014047570
(43) Date of publication of application: 18.01.2017
(73) Proprietor: Toyo Seikan Group Holdings, Ltd., Shinagawa-ku Tokyo 141-8627 (JP)
(72) Inventor: YOSHIKAWA SEISHI, Yokohama-shi Kanagawa 240-0062 (JP); KATAYAMA, Tsutaki, Yokohama-shi Kanagawa 240-0062 (JP)
(74) Representative: J A Kemp LLP
(86) International application number: PCT/JP2015/054292
(87) International publication number: WO 2015/137057

(56) References cited:
- EP-A1- 2 843 024
- WO-A1-2012/121294
- WO-A1-2013/161754
- WO-A1-2013/161755
- WO-A1-2013/162002
- WO-A1-2014/091994
- WO-A1-2014/092146
- WO-A1-2014/112479
- JP-A- H1 084 827
- JP-A- H1 084 827
- JP-A- H09 137 069
- JP-A- H09 165 457
- JP-A- H09 286 870
- JP-A- 2002 363 291
- JP-A- 2002 371 201
- JP-A- 2002 371 201
- JP-A- 2004 204 038
- JP-A- 2005 194 295
- JP-A- 2007 537 930
- JP-A- 2012 149 205
- JP-B1- S4 830 352

## Description

### Technical Field:

This invention relates to a formed body of resin to be thrown into water, which is used being dispersed in water by throwing it into water.

### Background Art:

Ore chute drilling methods such as hydraulic fracturing method, rotary drilling method and riserless drilling method have now been widely employed for extracting underground resources.

The rotary drilling method consists of forming the ore chute by drilling while refluxing the mud and forming a filter cake called mud wall on the wall surfaces of the ore chute using a finishing fluid blended with a water loss-preventing agent. The cake maintains the chute walls stable, prevents the chute walls from collapsing and reduces friction to the fluid flowing through the ore chute.

The hydraulic fracturing method consists of pressurizing the fluid filled in the ore chute to form cracks (fractures) in the vicinities of the ore chute to thereby improve permeability in the vicinities of the ore chute (for easy flow of the fluid) in an attempt to increase the effective sectional area through which the resources such as oils and gases flow into the ore chute and, therefore, in order to improve productivity of the ore chute.

Here, as the water loss-preventing agent that is added to the finishing fluid, there are chiefly used calcium carbonate or various kinds of salts in a granular form. However, use of the water loss-preventing agent brings about such problems that it becomes necessary to conduct a treatment with acid to remove it, or the water loss-preventing agent stays clogged in the stratum from where the resources are to be extracted hindering the production.

Further, the fluid used in the hydraulic fracturing method is also called fracturing fluid. So far, a viscous fluid like jelly gasoline was used. However, as the shale gas or the like gas has now been extracted from the shale layer that exists in relatively shallow places and by taking the effects on the environment into consideration, it is becoming a common practice to use an aqueous dispersion solution obtained by dissolving or dispersing a polymer in water. As such polymers, there have been known a polylactic acid and a hydrolysable resin as represented by polyglycolic acid (see patent documents 1 and 2) .

The present applicant, too, has proposed the use of the polylactic acid, polyoxalate and polyglycolic acid in the aqueous dispersion solution for drilling as disclosed in Japanese Patent Application No. 2012-271084 and Japanese Patent Application No. 2012-254682.

That is, the hydrolysable resin such as polylactic acid exhibits hydrolysable capability and biodegradable capability, and, even if it remains under the ground, is decomposed by water, enzyme or microorganisms in the ground and does not adversely affect the environment. Further, the water that is used as a dispersant, too, can be considered to be far from affecting the environment as compared to gasoline or the like.

The ore chute is filled with the aqueous solution in which the hydrolysable resin is dispersed and is pressurized so that the hydrolysable resin permeates into the vicinities of the ore chute. Here, the resin undergoes the hydrolysis and loses the form of the resin. Therefore, spaces (or cracks) form in the portions where the resin has permeated accounting for an increase in the space of the ore chute into which the resources can flow.

The hydrolysable resin, further, works as a water loss-preventing agent and suppresses the water used as the dispersion medium from permeating into the ground too much. Therefore, the hydrolysable resin offers an advantage of minimizing a change in the environment in the stratum. Besides, no treatment with acid is necessary since it decomposes in the ground.

In addition, an acid is released by the hydrolysis of the hydrolysable resin. The released acid corrodes the shale layer and, as a result, accelerates the shale layer to become porous.

Here, the dispersion solution for extracting the underground resources is so used as to fill the ore chute; i.e., the dispersion solution is used in very large amounts at one time. Besides, the site where the underground resources are extracted is, usually, located far away from the site where the resin and the like are produced. Therefore, if the aqueous solution in which the hydrolysable resin is dispersed is used for extracting the resources, then the dispersion solution is, in many cases, prepared at the site of extraction. Namely, the powdery hydrolysable resin and water are mixed together at the site of extraction.

It is, therefore, urged to easily and safely conduct the operation for mixing the hydrolysable resin and water together. That is, at the site of extraction unlike in an ordinary factory of production, the operation for mixing is, in most cases, conducted outdoors and by the workers at the site. Besides, the hydrolysable resin is supplied in the form of a powder and is subject to cause a problem of flying dust.

From the standpoint of being used for extracting the underground resources, therefore, it is required that the hydrolysable resin is capable of being easily mixed in water without causing the problem of flying dust yet maintaining properties of the hydrolysable resin. Further, when thrown in on the ground, the hydrolysable resin is assuming the shape of a formed body. When introduced into the ore chute, however, the formed body collapses and the hydrolysable resin disperses in the solution. At present, however, no study has yet been carried out concerning the properties of the hydrolysable resins.

For example, a patent document 3 discloses an art of melt-kneading a hydrolysable resin such as polylactic acid and a polyacrylic acid or a polyethylene glycol to obtain composite particles that contain the hydrolysable resin. Here, however, the composite particles are simply obtained as an intermediate substance at the time of producing hydrolysable resin particles having a large strength but have not been produced for improving workability at the site of extraction. In fact, according to the study by the present inventors, the composite particles do not have workability that is requested at the site of extraction. Even if they could be mixed into water without causing the problem of flying dust, there occurs a problem of decrease in the properties as the hydrolysable resin undergoes the decomposition before being mixed.

A patent document 4 is proposing a polyglycolic acid composition that contains 100 parts by mass of a polyglycolic acid (PGA) and 1 to 25 parts by mass of a water-soluble high molecular material. This art, however, was developed to attain such an object that the PGA is decomposed in short periods of time by being dipped in an alkaline aqueous solution. Therefore, the polyglycolic acid composition does not, either, have properties required at the site of extraction.

### Prior Art Documents:

### Patent Documents:

Patent document 1: USP7,833,950
Patent document 2: WO2012/050187
Patent document 3: JP-A-2002-363291
Patent document 4: JP-A-2012-149205
Patent document 5: JP H09 137069 A

### Outline of the Invention:

### Problems that the Invention is to Solve:

It is, therefore, an object of the present invention to provide a formed body of resin to be thrown into water, that can facilitate the operation for mixing into water without impairing properties of the hydrolysable resin.

### Means for Solving the Problems:

According to the present invention, there is provided a formed body of resin for throwing into water having a dispersion structure in which a hydrolysable resin is dispersed in a matrix of a water-soluble resin; wherein the hydrolysable resin is a biodegradable polyester that is polyoxalate; and
wherein the water-soluble resin is polyethylene glycol and/or polyvinyl alcohol.

In the formed body of resin for throwing into water of the present invention, it is desired that:
(1) The hydrolysable resin is dispersed in a granular or fibrous form in the matrix;
(2) The biodegradable polyester is dispersed in a granular form having a grain size of 10 to 1000 *µ*m;
(3) The biodegradable polyester is dispersed in a fibrous form having 0.1 to 20 deniers and a filament length of 2 to 25 mm; and
(4) The matrix of the water-soluble resin is contained in an amount of 10 to 150 parts by weight per 100 parts by weight of the hydrolysable resin.

In the present invention, the formed body of resin to be thrown into water is produced by forming a mixture of a granular hydrolysable resin and a water-soluble resin at a temperature which is not lower than a melting point of the water-soluble resin but is lower than a melting point of the granular hydrolysable resin.

In the above method of production, the forming can be conducted by the compression forming or the extrusion forming.

### Effects of the Invention:

The formed body of resin to be thrown into water of the present invention is formed by a suitable method. The powder thereof can be formed in a large shape, such as tablet or pole. Upon being thrown into water, the formed body can be easily dispersed in water. Besides, a water-soluble resin is used as the matrix in the formed body. If the formed body is thrown into water, therefore, the water-soluble resin surrounding the hydrolysable resin dissolves in water and is removed. Therefore, hydrolysable capability of the hydrolysable resin is not impaired.

In the invention, further, the water-soluble resin used as the matrix works as a protection layer. Namely, even if the formed body of resin is left to stand outdoors, the hydrolysable resin is prevented from coming in contact with the open air. Therefore, the hydrolysable resin is effectively alleviated from being degraded due to oxidation or hydrolysis, and stably maintains its properties.

As described above, the formed body of resin to be thrown into water of the present invention does not cause the problem of flying dust when it is being mixed into water, and is easy to handle. Besides, the hydrolysable resin is effectively prevented from being degraded and its hydrolysable capability is not hindered when it is thrown into water.

Accordingly, the formed body of resin to be thrown into water of the present invention is very suited for preparing a dispersion solution for drilling at the site of extraction.

### Brief Description of the Drawing:

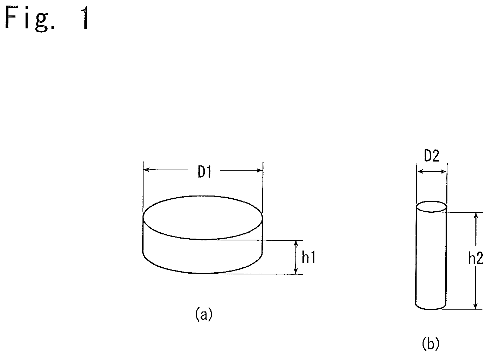

[Fig. 1] is a view showing representative formed bodies of resin to be thrown into water of the present invention.

### Modes for Carrying Out the Invention:

### <Formed body of resin to be thrown into water>

The formed body of resin of the present invention is thrown into water to prepare an aqueous dispersion solution of the hydrolysable resin. Therefore, the formed body of resin is in a shape that can be easily handled for being thrown into water.

The formed body of resin has a size in the order of millimeters so as to effectively prevent the occurrence of flying dust and so that it can be easily handled by man. Though not limited thereto only, the formed body of resin, usually, assumes shapes as shown in Fig. 1.

The formed body of resin shown in Fig. 1(a) is in a shape of a tablet having, roughly, a long diameter D1 of about 3 to about 10 mm, and a short diameter h1 of about 1 to about 5 mm. The formed body of resin in such a tablet shape is, usually, obtained by the compression forming.

The formed body of resin shown in Fig. 1(b) is in a shape of a pole having, roughly, a short diameter D2 of about 1 to about 5 mm, and a long diameter h2 of about 3 to about 10 mm. The formed body of resin in such a pole shape is, usually, obtained by the extrusion forming.

The formed body of resin of either type possesses decreased strength of granules if it loses the balance between the short diameter thereof and the long diameter thereof. When stored or transited being packed in bags, therefore, the structure collapses into a powder which is difficult to handle. It is, therefore, desired that a ratio (D1/h1 or h2/D2) of a long diameter and a short diameter is in a range of 3 to 10.

### <Structure of the formed body of resin to be thrown into water>

The above-mentioned formed body of resin to be thrown into water of the present invention has a dispersion structure in which the hydrolysable resin is dispersed in the matrix of the water-soluble resin. The formed body of resin of the dispersion structure is produced by forming a mixture of the granular hydrolysable resin and the water-soluble resin at a temperature lower than a melting point of the granular hydrolysable resin but not lower than a melting point of the water-soluble resin.

As means of forming, there can be employed various forming methods so far as the above dispersion structure can be realized. Usually, however, there is employed the compression forming or the extrusion forming.

In the compression forming, predetermined amounts of the granular hydrolysable resin and the water-soluble resin are dry-blended. The blend thereof is then compression-formed by using a predetermined mold under the above-mentioned temperature condition to obtain the tablet-type formed bodies of resin shown in Fig. 1(a).

In the extrusion forming, the granular hydrolysable resin and the water-soluble resin are kneaded in an extrusion-forming machine under the above-mentioned temperature condition. The kneaded product is then extruded, passed through a forming plate having holes of a predetermined size perforated therein, and the extruded product is cut into a suitable length to obtain pole-like formed bodies of resin shown in Fig. 1(b).

In either forming method, the forming is executed under a temperature condition in which the hydrolysable resin does not melt but the water-soluble resin melts. Therefore, the water-soluble resin turns into the matrix thereby to form an island-sea structure in which the granular hydrolysable resin is dispersed in the matrix.

The hydrolysable resin used for the formed body of resin to be thrown into water is a water-insoluble polyester. By using a powder obtained by freeze-milling the above polyester, an aqueous solution is prepared by dispersing the powder at a concentration of 10 mg/1 ml. The aqueous dispersion solution is incubated in an oven heated at 120°C for one month such that the weight reduction ratio is not less than 50%. For the dispersion solution for drilling, in particular, a biodegradable polyester is used, specifically polyoxalate.

The polyoxalate exhibits a suitable degree of hydrolysable capability in a low-temperature region of, particularly, 40 to 80°C. That is, the shale gas is extracted from the shale layer that is present underground at a relatively shallow depth. The dispersion solution for extraction is, in many cases, thrown into the ore chute in the above-mentioned temperature region and, therefore, the hydrolysable resin must have a suitable degree of hydrolysable capability in this temperature region.

Further, the polyoxalate releases oxalic acid upon being hydrolyzed. When used being blended with a component having a relatively small hydrolysable capability, such as polylactic acid, therefore, the polyoxalate works to promote the hydrolysis of the polylactic acid. It is, therefore, desired that the polyoxalate is used being blended with the polylactic acid.

The dispersion solution for extraction that is used as a fracturing fluid must work as a filler for shutting off the flow passage in the ore chute and must permeate into the ground. It is, therefore, desired that the hydrolysable resin is dispersed in a water-soluble resin that will be described later as a granular substance having a suitable grain size which is, for example, about 10 to about 1000 *µ*m.

From the standpoint of working as a filler, it is desired that the hydrolysable resin is dispersed in the water-soluble resin in a fibrous form having, for example, a filament thickness of 0.1 to 20 deniers and a filament length of about 2 to about 25 mm.

As required, further, the hydrolysable resin may be blended with known additives such as plasticizer, heat stabilizer, photo stabilizer, antioxidant, ultraviolet-ray absorber, frame retarder, coloring agent, pigment, filler, parting agent, antistatic agent, perfume, lubricant, foaming agent, anti-bacterial·anti-fungal agent and nucleating agent.

The water-soluble resin used as the matrix for dispersing the hydrolysable resin is a resin that has a solubility in water of 20°C of not less than 25 g/100 g. Specifically, from the standpoint of cost, formability and solubility in water, polyethylene glycol and/or polyvinyl alcohol is used.

In the formed body of resin to be thrown into water of the present invention, the ratio of amounts of the hydrolysable resin and the water-soluble resin is such that the amount of the water-soluble resin that is used is as small as possible so far as there is formed the dispersion structure in which the granular hydrolysable resin is dispersed in the matrix of the water-soluble resin. This is because when the formed body of resin is thrown into water to prepare a dispersion solution for extraction, the hydrolysable resin works as an effective component but the water-soluble resin is an unnecessary component.

As for the ratio of amounts of the hydrolysable resin and the water-soluble resin, therefore, the amount of the water-soluble resin is, usually, set to lie in a range of 10 to 150 parts by weight per 100 parts by weight of the hydrolysable resin. The preferred range, however, varies to some extent depending on the method of forming the formed body of resin. For instance, when the formed body of resin is produced by the compression forming, the water-soluble resin is used in an amount of 10 to 100 parts by weight, specifically, 10 to 30 parts by weight, more specifically, 10 to 20 parts by weight and, further specifically, 10 to 15 parts by weight per 100 parts by weight of the hydrolysable resin. When the formed body of resin is produced by the extrusion forming, the water-soluble resin is used in an amount of, desirably, about 100 to 150 parts by weight per 100 parts by weight of the hydrolysable resin. Use of the water-soluble resin in unnecessarily large amounts results in a decrease in the amount of the effective component in the dispersion solution for extraction. If the water-soluble resin is used in small amounts, then it becomes difficult to form the granular hydrolysable resin at temperatures lower than a melting point thereof and, therefore, it becomes difficult to form the dispersion structure using the water-soluble resin as the matrix.

### <Use>

The formed body of resin to be thrown into water of the present invention has a dispersion structure in which the granular hydrolysable resin is covered with the water-soluble resin, and is capable of effectively avoiding such an inconvenience as flying dust, is easy to handle and, besides, effectively prevents the hydrolysable resin from being degenerated. When thrown on the ground, the formed body maintains it shape. When introduced into the ore chute, however, the formed body collapses and the hydrolysable resin disperses in the solution. This is desirable for preparing the dispersion solution for extraction, such as fracturing fluid that is used at the site of extracting the underground resources. Namely, the formed body of resin is easy to handle at the site of extraction, and can be easily thrown by human hand into water to prepare the dispersion solution for extraction even outdoors without adversely affecting the environment.

In preparing the dispersion solution for extraction, the formed body of resin is thrown into water, usually, in such amounts that the hydrolysable resin is present in an amount of 0.01 to 20% by weight and, specifically, 0.01 to 10% by weight in the dispersion solution. By using the above dispersion solution, it is allowed to smoothly carry out the ore chute drilling or the hydraulic fracturing.

### EXAMPLES

The invention will now be described by way of the following Experiments.

Here, described below are the hydrolysable resin, water-soluble resin and measuring methods used in the Experiments.

### Hydrolysable resin;

As the hydrolysable resin for use in the experiment, a polyoxalate (PEOx) was prepared as described below.

Into a 1L separable flask equipped with a mantle heater, a liquid temperature thermometer, a stirrer, a nitrogen introduction tube and a distillation column, there were introduced:
dimethyl oxalate, 472 g (4 mols),
ethylene glycol, 297 g (4.8 mols), and
antimony trioxide, 0.17 g,
and the temperature in the flask was elevated in a nitrogen stream to 120°C to carry out the polymerization under normal pressure.

After methanol started distilling off, the liquid temperature was elevated little by little up to 200 to, further, continue the polymerization under normal pressure, and 260 ml of a distillate was finally obtained.

Thereafter, the polymerization was carried out under reduced pressure while maintaining the liquid temperature in the flask at 200°C under a pressure reduced down to 0.1 to 0.8 kPa. The obtained polymer was taken out, granulated by using a crusher, and was heat-treated at 120°C for 2 hours in vacuum so as to be crystallized.

There was thus obtained the PEOx for use as the hydrolysable resin.

The PEOx possessed a melting point of 180°C and a weight average molecular weight of 70,000.

### Measuring the melting points;

Apparatus: DSC 6220 (differential scanning calorimeter) manufactured by Seiko Instruments Co.
Amounts of samples: 5 to 10 mg
Measuring conditions: Nitrogen atmosphere, elevating the temperature at a rate of 10°C/min. over a range of 0°C to 250°C. Melting points were found from the peaks.

### <Measuring the molecular weights>

Apparatus: Gel permeation chromatograph GPC
Detector: Differential refractive index detector RI
Column (Showa Denko Co.): Shodex HFIP-LG (one unit), HFIP-806M (2 units)
Solvent: Hexafluoroisopropanol (5 mM sodium trifluoroacetate is added)
Flow rate: 0.5 mL/min.
Column temperature: 40°C
Preparation of samples: 5 milliliters of a solvent was added to about 1.5 mg of a sample and the mixture thereof was mildly stirred at room temperature (sample concentration of about 0.03%). After having confirmed with the naked eye that the sample had been dissolved, the solvent was filtered using a 0.45 *µ*m filter. All samples were measured in about one hour from the start of preparation. A polymethyl methacrylate was used as the standard.

### Water-soluble resin;

### Polyethylene glycol (PEG)

Weight average molecular weight (Mw): 8000
Solubility in water (20°C): 30 g/100 g or more
Melting point: 60°C

### Evaluating the formability of tablet (formed body of resin);

Formability of the tablet was evaluated with the eye on the following basis of judgement:
○: Did not collapse.
×: Partly collapsed immediately after formed.

### Evaluating the collapsibility of the tablet (formed body of resin) in water;

Into a vial, there were introduced a piece of tablet formed by the compression forming and 10 mL of distilled water which were then held at 45°C, 100 rpm, for 10 minutes to evaluate the collapse of tablet with the eye. The evaluation was on the following basis:
○: Particles dispersed in water.
×: The tablet precipitated maintaining its shape.

### Evaluating the disintegration of the tablet (formed body of resin);

After the tablet was evaluated for its collapsibility, the vial was left to stand still in an oven maintained at 70°C for 4 days, and disintegration of the powder in water was evaluated with the eye. The evaluation was on the following basis:
○: Particles remained in very small amounts.
×: The amount of the particles remaining was the same as the amount thereof that was thrown in.

### <Example 1>

1.5 Grams of a mass of the PEOx synthesized above was thrown into a pulverizer (IMF-800DG manufactured by Iwatani Sangyo Co.) and was pulverized therein for 3 minutes. The obtained powder was passed through a mesh of a perforation size of 500 *µ*m. The PEOx powder that has passed through was used as a hydrolysable resin powder.

100 Parts by weight of the above hydrolysable resin powder and 11.1 parts by weight of the water-soluble resin (PEG) were mixed together in advance in a mortar.

The mixed powder was introduced into an aluminum pan for measurement of the differential scanning calorimeter, and was heated and compressed at 100°C for 5 minutes to obtain a tablet (compression-formed body) of a height (h1) of 1 mm and a diameter (D1) of 5 mm.

The obtained tablet was evaluated for its formability, collapsibility and disintegration in water by the methods described above. The results were as shown in Table 1.

### <Example 2>

A tablet of the same size was formed by the compression forming in the same manner as in Example 1 but changing the amount of the water-soluble resin (PEG) into 43 part by weight, and was similarly evaluated. The results were as shown in Table 1.

### <Example 3>

A tablet of the same size was formed by the compression forming in the same manner as in Example 1 but changing the amount of the water-soluble resin (PEG) into 100 part by weight, and was similarly evaluated. The results were as shown in Table 1.

The tablet did not collapse despite it was caused to fall from a height of 80 cm.

### <Example 4>

A tablet of the same size was formed by the compression forming in the same manner as in Example 1 but changing the amount of the water-soluble resin (PEG) into 5.3 part by weight, and was similarly evaluated. The results were as shown in Table 1.

Though the tablet could be formed, it collapsed so easily and could not maintain the shape of tablet that the collapsibility and disintegrating properties could not be evaluated.

**Table 1**

| | * 1 | *2 | *3 | *4 |
|---|---|---|---|---|
| Example 1 | 11.1 | ○ | ○ | ○ |
| Example 2 | 43 | ○ | ○ | ○ |
| Example 3 | 100 | ○ | ○ | ○ |
| Example 4 | 5.3 | △ | - | - |

| | | | | |
|---|---|---|---|---|
| *1: Amount of water-soluble resin (pts. by wt.) *2: Formability of tablet *3: Collapsibility of tablet *4: Disintegration of tablet | | | | |

The amount of the water-soluble resin was per 100 parts by weight of the hydrolysable resin.

## Claims

1. A formed body of resin for throwing into water, having a dispersion structure in which a hydrolysable resin is dispersed in a matrix of a water-soluble resin;
wherein the hydrolysable resin is a biodegradable polyester that is polyoxalate; and
wherein the water-soluble resin is polyethylene glycol and/or polyvinyl alcohol.

2. The formed body of resin for throwing into water according to claim 1, wherein the hydrolysable resin is dispersed in a granular or fibrous form in the matrix.

3. The formed body of resin for throwing into water according to claim 1, wherein the biodegradable polyester is dispersed in a granular form having a grain size of 10 to 1000 *µ*m.

4. The formed body of resin for throwing into water according to claim 1, wherein the biodegradable polyester is dispersed in a fibrous form having 0.1 to 20 deniers and a filament length of 2 to 25 mm.

5. The formed body of resin for throwing into water according to claim 1, wherein the matrix of the water-soluble resin is contained in an amount of 10 to 150 parts by weight per 100 parts by weight of the hydrolysable resin.

6. A method of producing the formed body of resin for throwing into water of claim 1, wherein a mixture of the granular hydrolysable resin and the water-soluble resin is formed at a temperature not lower than a melting point of the water-soluble resin but lower than a melting point of the granular hydrolysable resin.

7. The method of production according to claim 6, wherein the forming is conducted by the compression forming or the extrusion forming.

## Patentansprüche

1. Formkörper aus Harz zum Einbringen in Wasser, der eine Dispersionsstruktur aufweist, in der ein hydrolysierbares Harz in einer Matrix aus einem wasserlöslichen Harz dispergiert ist;
wobei das hydrolysierbare Harz ein biologisch abbaubarer Polyester ist, der ein Polyoxalat ist; und
wobei es sich bei dem wasserlöslichen Harz um Polyethylenglykol und/oder Polyvinylalkohol handelt.

2. Formkörper aus Harz zum Einbringen in Wasser nach Anspruch 1, wobei das hydrolysierbare Harz in einer körnigen oder faserigen Form in der Matrix dispergiert ist.

3. Formkörper aus Harz zum Einbringen in Wasser nach Anspruch 1, wobei der biologisch abbaubare Polyester in einer körnigen Form dispergiert ist, die eine Korngröße von 10 bis 1000 µm aufweist.

4. Formkörper aus Harz zum Einbringen in Wasser nach Anspruch 1, wobei der biologisch abbaubare Polyester in einer faserigen Form mit 0,1 bis 20 Denier und einer Filamentlänge von 2 bis 25 mm dispergiert ist.

5. Formkörper aus Harz zum Einbringen in Wasser nach Anspruch 1, wobei die Matrix des wasserlöslichen Harzes in einer Menge von 10 bis 150 Gew.-Teilen pro 100 Gew.-Teilen des hydrolysierbaren Harzes enthalten ist.

6. Verfahren zur Herstellung des Formkörpers aus Harz zum Einbringen in Wasser nach Anspruch 1, wobei eine Mischung aus dem körnigen hydrolysierbaren Harz und dem wasserlöslichen Harz bei einer Temperatur gebildet wird, die nicht niedriger als der Schmelzpunkt des wasserlöslichen Harzes, aber niedriger als der Schmelzpunkt des körnigen hydrolysierbaren Harzes ist.

7. Herstellungsverfahren nach Anspruch 6, wobei die Formgebung durch Formpressen oder Strangpressen durchgeführt wird.

## Revendications

1. Corps formé de résine à jeter dans l'eau, ayant une structure de dispersion dans laquelle une résine hydrolysable est dispersée dans une matrice d'une résine soluble dans l'eau ;
dans lequel la résine hydrolysable est un polyester biodégradable qui est un polyoxalate ; et
dans lequel la résine soluble dans l'eau est du polyéthylène glycol et/ou de l'alcool polyvinylique.

2. Corps formé de résine à jeter dans l'eau selon la revendication 1, dans lequel la résine hydrolysable est dispersée sous forme granulaire ou fibreuse dans la matrice.

3. Corps formé de résine à jeter dans l'eau selon la revendication 1, dans lequel le polyester biodégradable est dispersé sous une forme granulaire ayant une granulométrie de 10 à 1000 µm.

4. Corps formé de résine à jeter dans l'eau selon la revendication 1, dans lequel le polyester biodégradable est dispersé sous une forme fibreuse ayant de 0,1 à 20 deniers et une longueur de filament de 2 à 25 mm.

5. Corps formé de résine à jeter dans l'eau selon la revendication 1, dans lequel la matrice de la résine soluble dans l'eau est contenue en une quantité de 10 à 150 parties en poids pour 100 parties en poids de la résine hydrolysable.

6. Procédé de production du corps formé de résine à jeter dans l'eau selon la revendication 1, dans lequel un mélange de la résine hydrolysable granulaire et de la résine soluble dans l'eau est formé à une température non inférieure à un point de fusion de la résine soluble dans l'eau, mais inférieur à un point de fusion de la résine hydrolysable granulaire.

7. Procédé de production selon la revendication 6, dans lequel le formage est réalisé par le formage par compression ou le formage par extrusion.
